(19) Europäisches Patentamt / European Patent Office / Office européen des brevets

(11) **EP 1 763 190 A2**

(12) **EUROPEAN PATENT APPLICATION**

(43) Date of publication:
**14.03.2007 Bulletin 2007/11**

(51) Int Cl.:
*H04L 27/26* (2006.01)

(21) Application number: **06016898.6**

(22) Date of filing: **12.08.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU** | • **Yang, Hongwei**<br>**Alcatel Shanghai Bell Co., Ltd.**<br>**201206 Shanghai (CN)**<br>• **Li, Dong**<br>**201206 Shanghai (CN)** |
| (30) Priority: **13.09.2005 CN 200510029602** | (74) Representative: **Dreiss, Fuhlendorf, Steimle & Becker**<br>**Patentanwälte,**<br>**Postfach 10 37 62**<br>**70032 Stuttgart (DE)** |
| (71) Applicant: **Alcatel**<br>**75008 Paris (FR)** | |
| (72) Inventors:<br>• **Guo, Feng**<br>**201206 Shanghai (CN)** | |

(54) **Method and apparatus for frame synchronization in a distributed MIMO OFDM system**

(57)    The present invention relates to technique for frame synchronization in a distributed MIMO-OFDM system, and the method thereof comprises: generating step: generating preambles for synchronization at respective transmitting antennas using PN sequences with different lengths which have one-to-one correspondence to the respective transmitting antennas by a transmitter; locating step: performing calculation using correlation calculators with width of window corresponding to the lengths of the PN sequences to locate head of frame by a receiver. The present invention proposes a solution for frame synchronization using sequences with non-equal periods in a distributed MIMO-OFDM system, and head of the frames transmitted from respective transmitting antennas can be accurately found using correlation calculation at a receiver by means of the technique. Since the PN sequences with different lengths are used at respective transmitting antennas to form corresponding preambles, when a correlation calculator corresponding to a certain transmitting antenna is used, all data or preambles at other antennas can not produce interference, i.e. delay between distributed transmitting antennas can not have an effect on detection of head of frame at a certain transmitting antenna.

Figure 1

EP 1 763 190 A2

**Description**

Technical field

The present invention relates to techniques for frame synchronization in a distributed Multiple Input Multiple Output (MIMO) Orthogonal Frequency Division Multiplexing (OFDM) system, particularly to method for frame synchronization in the system, system for implementing frame synchronization, transmission apparatus and receiving apparatus.

Background art

OFDM technique is a multi-carrier transmission technique, which has higher spectrum efficiency due to overlapping orthogonality among multiple carriers, and an effect of resisting multipath delay in wireless channels to allow a wireless channel with frequency selection to be converted to a flat-fading channel for each sub-carrier due to long interval between symbols in time domain and cyclic prefix inserted ahead of each symbol. In one word, the OFDM technique is a efficient solution for wireless data transmission at a high rate under a multipath fading channel and one of advanced solutions for wireless communication in future.

Technique of space division multiplexing can obtain very high frequency efficiency without loss of spectrum and transmitting power by based on linear relationship between MIMO system capacity and the number of transmission antennas, and is thus widely concerned. The MIMO system can be divided into centralized MIMO system and distributed MIMO system based on distance between array elements of a transmitter antenna array. The distance between array elements of the antenna array of a conventional centralized MIMO system is shorter and the elements are usually positioned in the same base station. The distance between array elements of the antenna array of a distributed MIMO system is longer. For example, the array elements are positioned in different base stations in an application of a macro diversity system or a distributed system. Compared with the conventional centralized MIMO system, the distributed MIMO system can obtain higher diversity gain and more stable correlation characteristics of space channels, and will be an important trend of MIMO system evolution in future.

Synchronization has a great effect on entire performance of the OFDM system. Low accuracy in time synchronization directly leads to inaccurate location of Fast Fourier Transform (FFT) window, and thus to serious Inter-Symbol Interference (ISI). Meanwhile, error in frequency synchronization will lead to Inter-sub-Carrier Interference (ICI), which results in performance degradation. OFDM synchronization includes four steps of time coarse synchronization, frequency coarse synchronization, time fine synchronization and frequency fine synchronization, in which the time coarse synchronization is first performed, and its accuracy will have a great effect on operation complexity and accuracy of the other three steps. The key to the process of time coarse synchronization is to find a head of a frame. Now, research relating to frame synchronization is mainly directed to ways of correlation calculation of inserted known pilot sequences. Many solutions have been proposed for a Single Input Single Output (SISO) OFDM system, but less research is made for solution to synchronization in a MIMO-OFDM system, particularly in a distributed MIMO-OFDM system.

It is assumed that data transmitted from different transmitting antennas reaches the receiving antenna at the same time, i.e. only a single time offset exists between the transmitting and receivers, in "Receiver implementation for a MIMO OFDM system", IEEE Volume 1, 17-21 Nov. 2002 Page(s): 716 - 720, by Mody and Stueber. Since the date received at the receiver of the MIMO system is superposition of data transmitted from all transmitting antennas, it is necessary to know which data is transmitted from which transmitting antenna. Therefore, it is needed to find heads of frames transmitted from different antennas. When the distributed MIMO-OFDM system is used, the frames transmitted from respective transmitting antennas will reach the receiver at different time even if multipath effect of channels is not considered. The structure of preamble used in the reference of Mody and Stueber is the same for each transmitting antenna, but it is proposed that shifting orthogonal PN sequences shall be used as preamble at different transmitting antennas, and shifting of the preamble between different antennas shall be greater than the channel response time in "Frequency synchronization for MIMO OFDM wireless LAN systems", 2003 IEEE 58th Volume 2, 6-9 Oct. 2003 Page(s):781 - 785 Vol.2, by Schenk and Zelst. However, the solution proposed in "Frequency synchronization for MIMO OFDM wireless LAN systems" only considers the multipath effect of channels, without time delay between different transmitting antennas in a distributed system.

Thus it can be seen that the existing solutions are all based on a non-distributed MIMO-OFDM system, and that preambles having the same period length and good self-correlation performance are inserted at head of frames for different transmitting antennas (the preambles of different transmitting antennas can be either the same or different). These solutions can not be directly applied to synchronization of a distributed MIMO-OFDM system.

Therefore, one of the problems to be addressed of the present application is a solution to synchronization in an actual distributed MIMO-OFDM system.

Content of the invention

The present invention is directed to provide method, system, and transmitting/receiving apparatus for frame synchronization and corresponding method for efficiently solving a problem of synchronization in an actual distributed MIMO-OFDM system.

The present invention contains six items of contents under a general inventive concept and the solutions thereof are as follows.

The first solution of the present invention: a method for frame synchronization in a distributed MIMO-OFDM system, comprising the following steps: generating step: generating preambles for synchronization at respective transmitting antennas using PN sequences with different lengths which have one-to-one correspondence to the respective transmitting antennas by a transmitter; locating step: performing calculation using correlation calculators with width of window corresponding to the lengths of the PN sequences to locate head of frame by a receiver.

In the above method for frame synchronization in the system, the lengths of the PN sequences which have one-to-one correspondence to the respective transmitting antennas have a non-multiple relationship.

In the above method for frame synchronization in the system, generating preambles in the generating step comprises the following steps: setting step: equally setting lengths of the preambles of the respective transmitting antennas as $N_{preamble}$; repeating step: repeating the PN sequences with respective lengths a number of times to form corresponding first sequences; comparing step: comparing the length of each first sequence with the length of the preamble $N_{preamble}$ to obtain a result for comparison; determining step: performing operation on the formed first sequence according to a predetermined rule based on the result for comparison to form a second sequence with length equal to the length of the preamble $N_{preamble}$, which is determined as the preamble.

In the above method for frame synchronization in the system, the predetermined rule is, when the first sequence has length equal to the length of the preamble $N_{preamble}$, directly determining the first sequence as the preamble.

In the above method for frame synchronization in the system, the predetermined rule is, when the first sequence has length slightly greater than the length of the preamble $N_{preamble}$, setting the data of the first $N_{preamble}$ positions in the first sequence as the preamble.

In the above method for frame synchronization in the system, the predetermined rule is, when the first sequence has length slightly less than the length of the preamble $N_{preamble}$, filling the first sequence with data of former positions in the corresponding PN sequence until the length of the first sequence is equal to the length of the preamble $N_{preamble}$ to form the second sequence which is determined as the preamble.

In the above method for frame synchronization in the system, the locating step comprises the following steps: calculating step: 1) performing a correlation multiplying-accumulation calculation from an initial position which is any position j of the received data frame to obtain a correlation accumulation value at the position j and storing it in a first empty position of a register; 2) repeating said correlation multiplying-accumulation calculation to obtain a correlation accumulation value at a next position $j = j+1$ and storing it in a next empty position of the register; 3) repeating the above process until all positions of the register are filled with the calculated correlation accumulation values, i.e. the correlation accumulation values for all positions are calculated in a range of a data frame; step for determining head of frame: performing modulo operation on all correlation accumulation values in the register to find the position for the maximum of accumulation values as the head of the frame transmitted from the corresponding transmitting antenna.

In the above method for frame synchronization in the system, the register is selected as storage means having a capacity of the correlation accumulation values for positions of a whole data frame.

In the above method for frame synchronization in the system, the step of performing a correlation multiplying-accumulation calculation to obtain a correlation accumulation value at a position comprises the following steps: setting an accumulator as zero; performing conjugated multiplying on the data of the initial position j and the data at a position spaced by length $P_i$ of the corresponding PN sequence after the initial position and adding the result of the multiplying to the accumulator; shifting right the position for calculation to the position j+1, performing the above conjugated multiplying for the position and adding the result to the accumulator; repeating the above operation until the window has been shifted right by $N_{preamble} - P_i$ positions, thereby the correlation accumulation value for the position j is calculated; storing the correlation accumulation value for the position j in the register.

The second solution of the present invention: a distributed MIMO-OFDM system for implementing frame synchronization, comprising body of a transmitter and body of a receiver, characterized in that the system further comprises: 1) a database of transmitter and a module for controlling generation of preamble connected to the body of the transmitter, wherein the database of transmitter, also connected to the module for controlling generation of preamble, is for storing PN sequences with different lengths used for respective transmitting antennas; the module for controlling generation of preamble is for generating preambles for synchronization using the PN sequences with different lengths; 2) a database of receiver and a module for controlling location of head of frame connected to the body of the receiver, wherein the database of receiver, also connected to the module for controlling location of head of frame, is for storing the different lengths of the PN sequences corresponding to the respective transmitting antennas; the module for controlling location of head of frame is for detecting the head of frame to find a position for a maximum of accumulation values in a range of a frame for each transmitting antenna as the head of frame.

In the above distributed MIMO-OFDM system, the lengths of the PN sequences stored in the database of transmitter have a non-multiple relationship.

In the above distributed MIMO-OFDM system, the module for controlling generation of preamble comprises a comparison unit and a processing unit connected to the comparison unit, wherein the comparison unit is for comparing the length of the sequence formed by repeating the PN sequence with each length a number of times with the set length of the preamble to obtain a result for comparison; the processing unit is for processing on the result of comparison and determining another sequence with length equal to the preset length of the preamble according to a predetermined rule as the preamble corresponding to a transmitting antenna.

In the above distributed MIMO-OFDM system, the module for controlling location of head of frame comprises a calculation unit and a location unit connected to the calculation unit, wherein the calculation unit is for obtaining correlation accumulation values for all positions in a range of a frame by calculation; the location unit is for performing modulo operation on the correlation accumulation values to find the position for the maximum of accumulation values as the head of the frame transmitted from the corresponding transmitting antenna.

The third solution of the present invention: a transmitting apparatus, comprising body of a transmitter, wherein the apparatus further comprises: 1) a database of transmitter, connected to the body of the transmitter and a module for controlling generation of preamble, for storing PN sequences with different lengths used for respective transmitting antennas; the module for controlling generation of preamble, connected to the body of the transmitter and the database of transmitter, for generating preambles for synchronization using the PN sequences with different lengths.

In the above transmitting apparatus, the lengths of the PN sequences stored in the database of transmitter have a non-multiple relationship.

In the above transmitting apparatus, the module for controlling generation of preamble comprises a comparison unit and a processing unit connected to the comparison unit, wherein the comparison unit is for comparing the length of the sequence formed by repeating the PN sequence with each length a number of times with the set length of the preamble to obtain a result for comparison; the processing unit is for processing on the result of comparison and determining another sequence with length equal to the preset length of the preamble according to a predetermined rule as the preamble.

The fourth solution of the present invention: a method for generating preambles for transmitting antennas of a transmitter, comprising one-to-one correspondingly generating preambles for synchronization at respective transmitting antennas using PN sequences with different lengths.

In the above method for generating preambles, the lengths of the PN sequences have a non-multiple relationship.

In the above method for generating preambles, generating preambles comprises the following steps: setting step: equally setting lengths of the preambles of the respective transmitting antennas as $N_{preamble}$; repeating step: repeating the PN sequences with respective lengths a number of times to form corresponding first sequences; comparing step: comparing the length of each first sequence with the length of the preamble $N_{preamble}$ to obtain a corresponding result for comparison; determining step: performing operation on the formed first sequence according to a predetermined rule based on the result for comparison to form a second sequence with length equal to the length of the preamble $N_{preamble}$, which is determined as the preamble.

In the above method for generating preambles, the predetermined rule is, when the first sequence has length equal to the length of the preamble $N_{preamble}$, directly determining the first sequence as the preamble.

In the above method for generating preambles, the predetermined rule is, when the first sequence has length slightly greater than the length of the preamble $N_{preamble}$, setting the data of the first $N_{preamble}$ positions in the first sequence as the preamble.

In the above method for generating preambles, the predetermined rule is, when the first sequence has length slightly less than the length of the preamble $N_{preamble}$, filling the first sequence with data of former positions in the corresponding PN sequence until the length of the first sequence is equal to the length of the preamble $N_{preamble}$ to form the second sequence which is determined as the preamble.

The fifth solution of the present invention: a receiving apparatus, comprising body of a receiver, a database of receiver and a module for controlling location of head of frame connected to the body of the receiver, wherein the database of receiver, respectively connected to the body of the receiver and the module for controlling location of head of frame, is for storing the different lengths of the PN sequences corresponding to the respective transmitting antennas; the module for controlling location of head of frame, respectively connected to the body of the receiver and the database of receiver, is for detecting the head of frame based on the length of the PN sequence used for a transmitting antenna using a correlation calculator with width of window having the same length to find a position for a maximum of correlation accumulation values in a range of a frame for each transmitting antenna as the head of frame.

In the above receiving apparatus, the lengths of the PN sequences stored in the database of receiver have a non-multiple relationship.

In the above receiving apparatus, the module for controlling location of head of frame comprises a calculation unit and a location unit connected to the calculation unit, wherein the calculation unit is for obtaining correlation accumulation values for all positions in a range of a frame by calculation; the location unit is for performing modulo operation on the correlation accumulation values to find the position for the maximum of accumulation values as the head of the frame transmitted from the corresponding transmitting antenna.

The six solution of the present invention: a method for locating head of frame in a receiver, comprising performing calculation using correlation calculators with width of window corresponding to the lengths of the PN sequences to locate head of frame to locate the head of the frame.

In the above method for locating head of frame, it comprises the following steps: calculating step: 1) performing a correlation multiplying-accumulation calculation from an initial position which is any position j of the received data frame to obtain a correlation accumulation value at the position j and storing it in a first empty position of a register; 2) repeating said correlation multiplying-accumulation calculation to obtain a correlation accumulation value at a next position $j = j+1$ and storing it in a next empty position of the register; 3) repeating the above process until all positions of the register are filled with the calculated correlation accumulation values, i.e. the correlation accumulation values for all positions are calculated in a range of a data frame; step for determining head of frame: performing modulo operation on all correlation accumulation values in the register to find the position for the maximum of accumulation values as the head of the frame transmitted from the corresponding transmitting antenna.

In the above method for locating head of frame, the register is selected as storage means having a capacity of the correlation accumulation values for positions of a whole data frame.

In the above method for locating head of frame, the step of performing a correlation multiplying-accumulation calculation to obtain a correlation accumulation value at a position comprises the following steps: setting an accumulator as zero; performing conjugated multiplying on the data of the initial position j and the data at a position spaced by length $P_i$ of the corresponding PN sequence after the initial position and adding the result of the multiplying to the accumulator; shifting right the position for calculation to the position j+1, performing the above conjugated multiplying for the position and adding the result to the accumulator; repeating the above operation until the window has been shifted right by $N_{preamble} - P_i$ positions, thereby the correlation accumulation value for the position j is calculated; storing the correlation accumulation value for the position j in the register.

Using the above technical solution, i.e. a solution for frame synchronization using sequences with non-equal periods in a distributed MIMO-OFDM system proposed in the present invention, head of the frames transmitting from respective transmitting antennas can be accurately found using correlation calculation at a receiver. Since the PN sequences with different lengths are used at respective transmitting antennas to form corresponding preambles, when a correlation calculator corresponding to a certain transmitting antenna is used, all data or preambles at other antennas can not produce interference, i.e. delay between distributed transmitting antennas can not has an effect on detection of head of frame at a certain transmitting antenna. A simulation result indicates that the synchronization technique proposed by the present invention has good performance and application foreground for solution to synchronization in an actual distributed MIMO-OFDM system.

Description of Figure

Figure 1      is a schematic diagram showing structure of preamble when four transmitting antennas are used in accordance with the present invention;

Figure 2      is a schematic diagram when a correlation calculator with width of window of 64 is used for detecting head of the frame transmitting from a certain transmitting antenna at a receiver in accordance with the present invention;

Figure 3      is a schematic diagram of a distributed MIMO-OFDM system in accordance with the present invention;

Figure 4      is a schematic diagram showing structure of a transmitting apparatus in accordance with the present invention;

Figure 5      is a schematic diagram showing structure of a receiving apparatus in accordance with the present invention;

Figure 6      is a schematic diagram showing simulation result of the synchronization method in accordance with the present invention;

Figure 7      is an enlarged schematic diagram showing two peaks in Figure 6.

Mode of Carrying Out the Invention

The solution to frame synchronization in a distributed MIMO-OFDM system proposed by the present invention is based on preambles with different periods inserted at head of frame for different transmitting antennas. It is assumed that $N_t$ transmitting antennas are used and the length of preamble for synchronization at the head of each frame is $N_{preamble}$. When the frame is formed at the ith antenna, we form the preamble of the frame at the ith antenna using a PN sequence with length of $P_i$. Different PN sequences will be used among different transmitting antennas. Since $N_t$ transmitting antennas are used, we will use $N_t$ different values of $P_i$, and generally, there is no multiple relationship among the $N_t$ different values of $P_i$. Since the data received at a receiver is a superposition of $N_t$ frames after passing through a channel, $N_t$ different correlation calculators need to be used at respective receivers. The $N_t$ correlation calculators have one-to-one correspondence to the $N_t$ values of $P_i$, so when the head of the frame transmitted from a certain transmitting antenna is calculated, the frames transmitting from other transmitting antennas can not produce any interference.

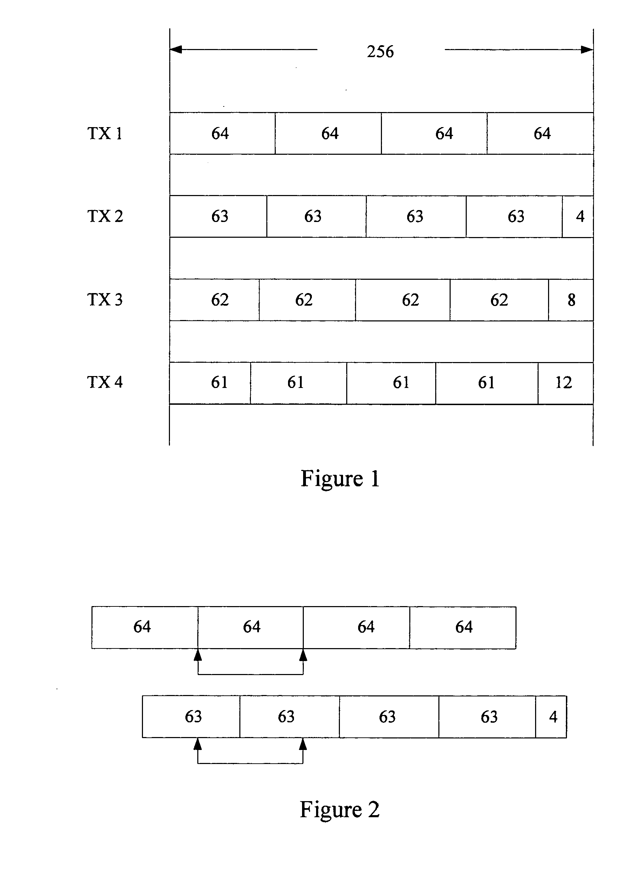

A schematic diagram of the preamble when four transmitting antennas are used proposed in the present invention is provided in Figure 1. In order to guarantee consistence of frame structure, the total length of preamble is the same for each transmitting antenna, and it is selected as 256 in Figure 1. At TX (transmitting antenna) 1, a PN sequence with length of 64 is used to generate the preamble of TX 1 by fill the preamble with length of 256 with the PN sequence with length of 64 four times. For TX 2, another PN sequence with length of 63 is used to fill the preamble with length of 256 by similar mean to that for TX 1. However, since 256 is not multiple of 63, four positions will be empty after four PN sequences of length of 63 are inserted. These four positions will be filled with the first four positions of the PN sequence with length of 63. The rest may be deduced by analogy, and thus the designing ways to generate preambles for TX 3 and TX 4 are similar to the above.

Because of distance between distributed antennas and receiving antennas and multipath effect of channels at the receiver, there is a time difference between the frames transmitted from different transmitting antennas reaching receiving antennas. However, when different correlation calculators are used at the receiver, the frames transmitted from other transmitting antennas can not produce interference. As shown in Figure 2, when the head of the frame transmitting from TX 1 is detected at the receiver, the width of window of the correlation calculator is 64. Since the repeating period of the preamble transmitted from TX 1 is 64 when the preamble is formed to generate the frame, the data intercepted by window is correlated. Meanwhile, since the period of the preambles transmitted from other transmitting antennas is neither 64 nor a multiple of 64, the superposition data intercepted by window with width of 64 is uncorrelated with the data of other transmitting antennas. Therefore, it can not have an effect on generation of correlation peak of head of the frame for TX 1.

The present invention contains four items of contents under the above general inventive concept and the solutions thereof are respectively described as follows.

The first solution of the present invention: a method for frame synchronization in a distributed MIMO-OFDM system.

Prior to detailed description of the embodiments of the present invention, the variables to be used in the description are explained and defined as follows. The length of each PN sequence can be expressed as $P_i, i = 0...N_t -1$. The data buffer of the ith PN sequence can be expressed as $data\_pn\_i[k], k=0,1...P_i -1$. The total length of preamble is $N_{preamble}$. The data buffer of the preamble used for the ith transmitting antenna is expressed as $data\_preamble\_i[k], k = 0,1...N_{preamble} -1$. The length of a frame is $N_{frame}$. The correlation value calculated for the kth position of a frame will be stored in $data\_correlation[k], k=0,1...N_{frame}-1$

Step 1: $N_t$ PN sequences with different lengths are prepared at the transmitter and the lengths of the PN sequence have no multiple relationship.

Step 2: the preamble is generated for each transmitting antenna.

$$data\_preamble\_i[k] = data\_pn\_i[k \bmod P_i],$$

Step 3: the accumulator is set to zero.

$sum_j = 0 ; j = 0 ... N_{frame} -1$, wherein j is a sequence number of the position to be calculated in a frame.

Step 4: at the receiver, when the head of frame for the ith transmitting antenna is detected, the correlation calculator having window with width of $P_i$ is used. A correlation multiplying calculation is performed from an initial position which is the current position j, i.e. conjugated multiplying is performed on the data of the current position and the data at a position spaced by $P_i$ after the current position and the result of the multiplying is added to the accumulator. Then, the window is shifted right a position and the above conjugated multiplying for the position is performed again. The above operation is repeated until the window has been shifted right by $N_{preamble} - P_i$ positions. It is assumed that the data obtained at the receiver is stored in a buffer *data*, and thus the data is a result of superposition of the frames which is channel-attenuated and has time offset transmitted from $N_t$ transmitting antennas. In the following equation, * denotes conjugated calculation.

$$sum_j = sum_j + \sum_{k=0}^{N_{preamble} - P_i - 1} data[k] \times data[k + P_i]^*$$

Step 5: $sum_j$ is stored in *data_correlation[j]*. The process returns to Step 2 in which $j = j+1$ and a correlation value is calculated for a next position until the register *data_correlation* is filled, i.e. the correlation values for all positions have been calculated in a range of a data frame.

Step 6: modulo operation is performed on all correlation values in the register *data_correlation* to find the position for the maximum of correlation values as the head of the frame transmitted from the i$^{th}$ transmitting antenna.

The position of the head of frame

$$= K = \arg\max(data\_correrlation[k]), k = 0...N_{frame} - 1 .$$

Steps 3-6 can be used for searching for head of the frame transmitted from any transmitting antenna as long as the length $P_i$ is replaced with the length of the PN sequence used for the i$^{th}$ transmitting antenna in Step 4.

The second solution of the present invention: a distributed MIMO-OFDM system for implementing frame synchronization

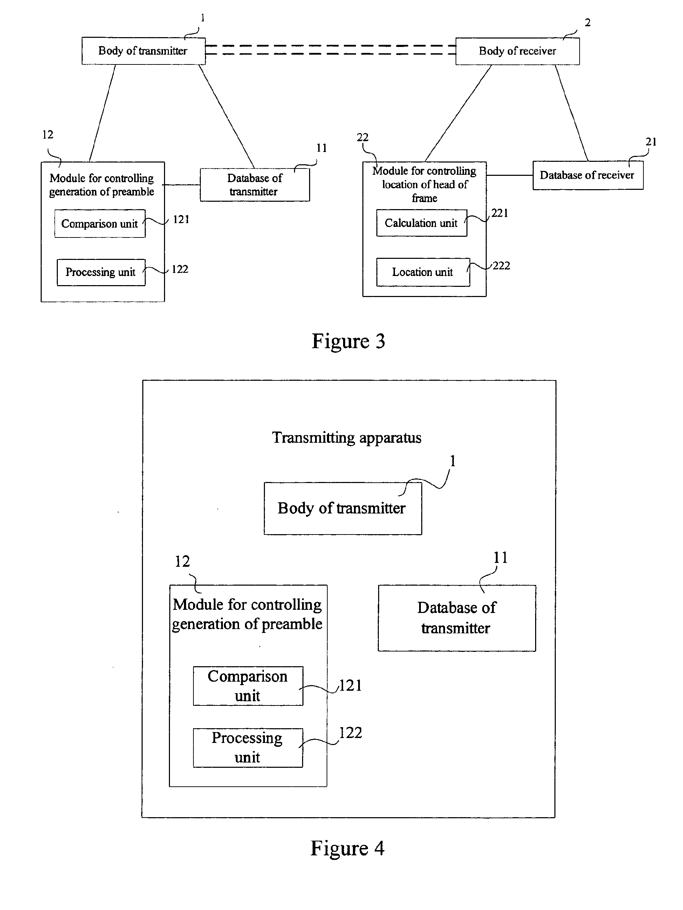

As shown in Figure 3, the distributed MIMO-OFDM system for implementing frame synchronization of the present invention comprises body of a transmitter 1 and body of a receiver 2.

The body of the transmitter is connected to a database of transmitter 11 and a module for controlling generation of preamble 12, wherein the database of transmitter 11 is used for storing PN sequences with different lengths used for respective transmitting antennas and the lengths have non-multiple relationship; the module for controlling generation of preamble 12 is used for generating preambles for synchronization using the PN sequences with different lengths. The PN sequences can be generated by any means, but it is needed to repeat the PN sequence based on the length of the PN sequence related to the antenna in the database of transmitter 11 when the preamble for synchronization is formed.

Referring to Figure 3, the module for controlling generation of preamble 12 comprises a comparison unit 121 and a processing unit 122 connected to the comparison unit, wherein:

the comparison unit 121 is used for comparing the length of the sequence formed by repeating the PN sequence with each length a number of times with the set length of the preamble $N_{preamble}$ to obtain a result for comparison;

the processing unit 122 is used for processing on the result of comparison and determining another sequence with length equal to the length of the preamble $N_{preamble}$ as the preamble.

The body of the receiver 2 is connected to a database of receiver 21 and a module for controlling location of head of frame 22, wherein the database of receiver 21 is used for storing the different lengths of the PN sequences corresponding to the respective transmitting antennas and the lengths have non-multiple relationship; the module for controlling location of head of frame 22 is used for detecting the head of frame to find a position for a maximum of accumulation values in a range of a frame for each transmitting antenna as the head of frame.

The module for controlling location of head of frame 22 comprises a calculation unit 221 and a location unit 222 connected to the calculation unit, wherein:

the calculation unit 221 is used for obtaining correlation accumulation values for all positions in a range of a frame by calculation;

the location unit 222 is used for performing modulo operation on the correlation accumulation values to find the position for the maximum of accumulation values as the head of the frame transmitted from a certain transmitting antenna.

The third solution of the present invention: a transmitting apparatus.

As shown in Figure 4, the transmitting apparatus of the present invention is formed by connecting the body of a transmitter 1 to a database of transmitter 11 and a module for controlling generation of preamble 12, wherein the database of transmitter 11 is used for storing PN sequences with different lengths used for respective transmitting antennas and the lengths have non-multiple relationship; the module for controlling generation of preamble 12 is used for generating preambles for synchronization using the PN sequences with different lengths. The PN sequences can be generated by any means, but it is needed to repeat the PN sequence based on the length of the PN sequence related to the antenna in the database of transmitter 11 when the preamble for synchronization is formed.

The module for controlling generation of preamble 12 comprises a comparison unit 121 and a processing unit 122 connected to the comparison unit, wherein:

the comparison unit 121 is used for comparing the length of the sequence formed by repeating the PN sequence with each length a number of times with the set length of the preamble $N_{preamble}$ to obtain a result for comparison;

the processing unit 122 is used for processing on the result of comparison and determining another sequence with length equal to the length of the preamble $N_{preamble}$ as the preamble.

The fourth solution of the present invention: a method for generating preambles for transmitting antennas of a transmitter, comprising one-to-one correspondingly generating preambles for synchronization at respective transmitting antennas using PN sequences with different lengths, wherein the lengths of the PN sequences have a non-multiple relationship.

Generating preambles comprises the following steps:

setting step: equally setting lengths of the preambles of the respective transmitting antennas as $N_{preamble}$;

repeating step: repeating the PN sequences with respective lengths a number of times to form corresponding first sequences; comparing step: comparing the length of each first sequence with the length of the preamble $N_{preamble}$ to obtain a corresponding result for comparison;

determining step: performing operation on the formed first sequence according to a predetermined rule based on the result for comparison to form a second sequence with length equal to the length of the preamble $N_{preamble}$, which is determined as the preamble.

In the predetermined rule, when the first sequence has length equal to the length of the preamble $N_{preamble}$, directly determining the first sequence as the preamble; when the first sequence has length slightly greater than the length of the preamble $N_{preamble}$, setting the data of the first $N_{preamble}$ positions in the first sequence as the preamble; when the first sequence has length slightly less than the length of the preamble $N_{preamble}$, filling the first sequence with data of former positions in the corresponding PN sequence until the length of the first sequence is equal to the length of the preamble $N_{preamble}$ to form the second sequence which is determined as the preamble.

The fifth solution of the present invention: a receiving apparatus.

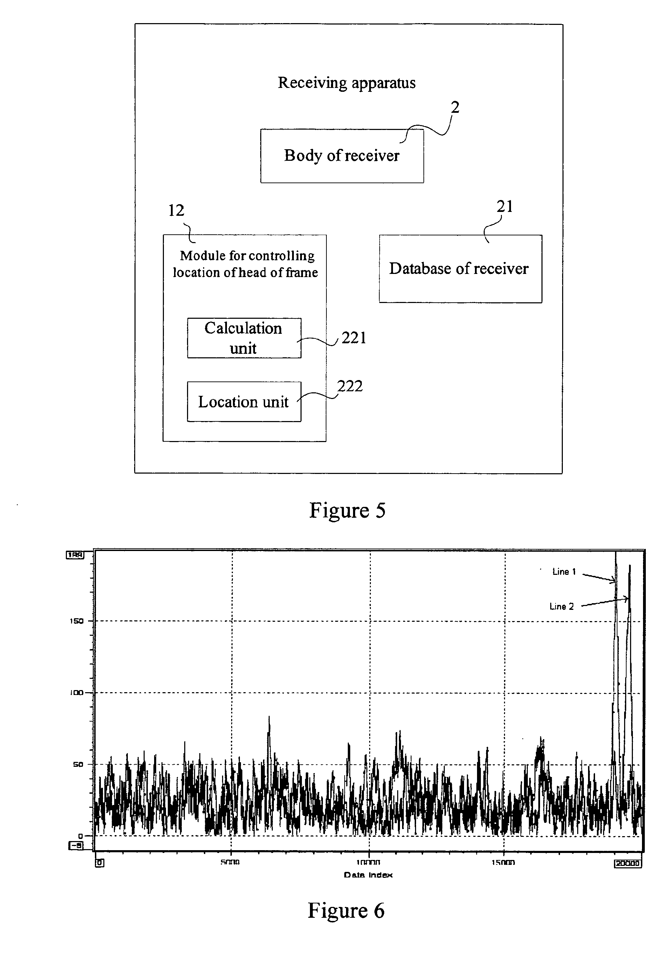

As shown in Figure 5, the receiving apparatus is formed by connecting the body of a receiver 2 to a database of receiver 21 and a module for controlling location of head of frame 22, wherein:

the database of receiver 21 is used for storing the different lengths of the PN sequences corresponding to the respective transmitting antennas and the lengths of the different PN sequences have a non-multiple relationship;

the module for controlling location of head of frame 22 is used for detecting the head of frame based on the length of the PN sequence used for a transmitting antenna using a correlation calculator with width of window having the same length to find a position for a maximum of correlation accumulation values in a range of a frame for each transmitting antenna as the head of frame.

The module for controlling location of head of frame 22 comprises a calculation unit 221 and a location unit 222 connected to the calculation unit 221, wherein:
the calculation unit 221 is used for obtaining correlation accumulation values for all positions in a range of a frame by calculation;

the location unit 222 is used for performing modulo operation on the correlation accumulation values to find the position for the maximum of accumulation values as the head of the frame transmitted from the corresponding transmitting antenna.

The six solution of the present invention: a method for locating head of frame in a receiver.

The method comprises performing calculation using correlation calculators with width of window corresponding to the lengths of the PN sequences to locate head of frame to locate the head of frame.

In the above method for locating head of frame, it comprises the following steps:

calculating step:

1) performing a correlation multiplying-accumulation calculation from an initial position which is any position j of the received data frame to obtain a correlation accumulation value at the position j and storing it in a first empty position of a register, wherein:

the step of performing a correlation multiplying-accumulation calculation to obtain a correlation accumulation value at a position comprises the following steps:

setting an accumulator as zero;

performing conjugated multiplying on the data of the initial position j and the data at a position spaced by length $P_i$ of the corresponding PN sequence after the initial position and adding the result of the multiplying to the accumulator; shifting right the position for calculation to the position j+1, performing the above conjugated multiplying for the position and adding the result to the accumulator;

repeating the above operation until the window has been shifted right by $N_{preamble}$ - $P_i$ positions, thereby the correlation accumulation value for the position j is calculated; storing the correlation accumulation value for the position j in the register.

2) repeating said correlation multiplying-accumulation calculation to obtain a correlation accumulation value at a next position $j = j$+1 and storing it in a next empty position of the register;

3) repeating the above process until all positions of the register are filled with the calculated correlation accumulation values, i.e. the correlation accumulation values for all positions are calculated in a range of a data frame; step for determining head of frame:

performing modulo operation on all correlation accumulation values in the register to find the position for the maximum of accumulation values as the head of the frame transmitted from the corresponding transmitting antenna.

The above register is selected as storage means having a capacity of the correlation accumulation values for positions of a whole data frame.

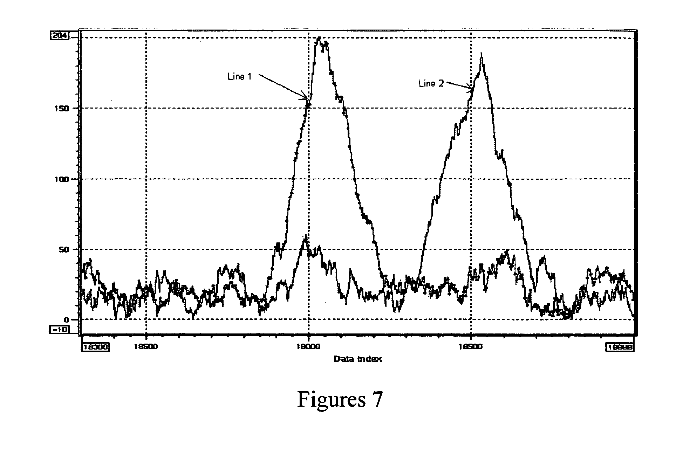

Summing up the above, in order to validate the algorithm of the present invention, it is simulated by computer, and the assumed condition in the simulation is shown in Table 1. The sequence for synchronization has power twice as much as that for data signals, and the result of simulation is shown in Figure 6 and Figure 7. Delay is added into the simulation, and a delay of 500 data points relative to the first transmitting antenna is added into the second transmitting antenna. Therefore, the correct positions of head of the frames transmitted from the first and second transmitting antennas shall be at 19032 and 19532, respectively. In the figure, Line 1 denotes the correlation values obtained by using the correlation calculator corresponding to the first transmitting antenna, and Line 2 denotes the correlation values obtained by using the correlation calculator corresponding to the second transmitting antenna. Under the condition that the Signal-to-Noise Ratio is 0dB, we can find visible correlation peaks obtained by correlation calculation. The region of the correlation peaks is enlarged in Figure 3, from which it can be seen that the obtained correlation peaks are at corresponding correct positions, and thus the present invention has proposed a feasible and effective algorithm for synchronization in a MIMO-OFDM system in the event of distributed antennas.

Table 1: Setting of parameters and models in the simulation

| Parameter and channel model | Setting in the simulation |
|---|---|
| $N_t$ | 2 |
| $N_{preamble}$ | 256 sample points |
| $P_i$ | $P_0$=64, $P_1$=63 |

(continued)

| Parameter and channel model | Setting in the simulation |
|---|---|
| Length of frame | 20000 sample points |
| Power of Sync Seq. | Twice as much as that for data transmission portion |
| Channel model | AWGN |
| SNR | 0 dB |
| Time delay between transmitting antennas | 500 sample points |

While the description of the present invention has been provided in conjunction with the detailed embodiments thereof, it is obvious for those skilled in the art to make alternatives, modifications and changes in accordance with the above description. Therefore, such alternatives, modifications and changes shall be included in the present invention when falling into the sprit and scope of the invention defined by the appended claims.

**Claims**

1. A method for frame synchronization in a distributed MIMO-OFDM system, comprising the following steps:

   generating step: a transmitter generating preambles for synchronization at respective transmitting antennas using PN sequences with different lengths which have one-to-one correspondence to the respective transmitting antennas;
   locating step: a receiver performing calculation using correlation calculators with width of window corresponding to the lengths of the PN sequences to locate head of frame.

2. The method for frame synchronization in a distributed MIMO-OFDM system as claimed in claim 1, wherein the lengths of the PN sequences which have one-to-one correspondence to the respective transmitting antennas have a non-multiple relationship.

3. The method for frame synchronization in a distributed MIMO-OFDM system as claimed in claim 1 or 2, wherein generating preambles in the generating step comprises the following steps:

   setting step: equally setting lengths of the preambles of the respective transmitting antennas as $N_{preamble}$;
   repeating step: repeating the PN sequences with respective lengths a number of times to form corresponding first sequences;
   comparing step: comparing the length of each first sequence with the length of the preamble $N_{preamble}$ to obtain a result for comparison;
   determining step: performing operation on the formed first sequence according to a predetermined rule based on the result for comparison to form a second sequence with length equal to the length of the preamble $N_{preamble}$, which is determined as the preamble.

4. The method for frame synchronization in a distributed MIMO-OFDM system as claimed in claim 3, wherein the predetermined rule is, when the first sequence has length equal to the length of the preamble $N_{preamble}$, directly determining the first sequence as the preamble.

5. The method for frame synchronization in a distributed MIMO-OFDM system as claimed in claim 3, wherein the predetermined rule is, when the first sequence has length slightly greater than the length of the preamble $N_{preamble}$, setting the data of the first $N_{preamble}$ positions in the first sequence as the preamble.

6. The method for frame synchronization in a distributed MIMO-OFDM system as claimed in claim 3, wherein the predetermined rule is, when the first sequence has length slightly less than the length of the preamble $N_{preamble}$, filling the first sequence with data of former positions in the corresponding PN sequence until the length of the first sequence is equal to the length of the preamble $N_{preamble}$ to form the second sequence which is determined as the preamble.

**7.** The method for frame synchronization in a distributed MIMO-OFDM system as claimed in claim 1 or 2, wherein the locating step comprises the following steps:

calculating step:

1) performing a correlation multiplying-accumulation calculation from an initial position which is any position j of the received data frame to obtain a correlation accumulation value at the position j and storing it in a first empty position of a register;
2) repeating said correlation multiplying-accumulation calculation to obtain a correlation accumulation value at a next position $j = j+1$ and storing it in a next empty position of the register;
3) repeating the above process until all positions of the register are filled with the calculated correlation accumulation values, i.e. the correlation accumulation values for all positions are calculated in a range of a data frame;

step for determining head of frame: performing modulo operation on all correlation accumulation values in the register to find the position for the maximum of accumulation values as the head of the frame transmitted from the corresponding transmitting antenna.

**8.** The method for frame synchronization in a distributed MIMO-OFDM system as claimed in claim 7, wherein the register is selected as storage means having a capacity of the correlation accumulation values for positions of a whole data frame.

**9.** The method for frame synchronization in a distributed MIMO-OFDM system as claimed in claim 7, wherein the step of performing a correlation multiplying-accumulation calculation to obtain a correlation accumulation value at a position comprises the following steps:

setting an accumulator as zero;
performing conjugated multiplying on the data of the initial position j and the data at a position spaced
by length $P_i$ of the corresponding PN sequence after the initial position, and adding the result of the multiplying to the accumulator;
shifting right the position for calculation to the position j+1, performing the above conjugated multiplying for the position j+1 and adding the result to the accumulator;
repeating the above operation until the window has been shifted right by $N_{preamble}$ - $P_i$ positions, thereby the correlation accumulation value for the position j is calculated;
storing the correlation accumulation value for the position j in the register.

**10.** A distributed MIMO-OFDM system for implementing frame synchronization, comprising body of a transmitter (1) and body of a receiver (2), **characterized in that** the system further comprises:

1) a database of transmitter (11) and a module for controlling generation of preamble (12) connected to the body of the transmitter (1), wherein the database of transmitter (11), also connected to the module for controlling generation of preamble (12), is for storing PN sequences with different lengths used for respective transmitting antennas; the module for controlling generation of preamble (12) is for generating preambles for synchronization using the PN sequences with different lengths;
2) a database of receiver (21) and a module for controlling location of head of frame (22) connected to the body of the receiver (2), wherein the database of receiver (21), also connected to the module for controlling location of head of frame (22), is for storing the different lengths of the PN sequences corresponding to the respective transmitting antennas; the module for controlling location of head of frame (22) is for detecting the head of frame to find a position for a maximum of accumulation values in a range of a frame for each transmitting antenna as the head of frame.

**11.** The distributed MIMO-OFDM system as claimed in claim 10, wherein the lengths of the PN sequences stored in the database of transmitter (11) have a non-multiple relationship.

**12.** The distributed MIMO-OFDM system as claimed in claim 11, wherein the module for controlling generation of preamble (12) comprises a comparison unit (121) and a processing unit (122) connected to the comparison unit (121), wherein
the comparison unit (121) is for comparing the length of the sequence formed by repeating the PN sequence with each length a number of times with the set length of the preamble to obtain a result for comparison;
the processing unit (122) is for processing on the result of comparison and determining another sequence with length equal to the preset length of the preamble according to a predetermined rule as the preamble corresponding to a transmitting antenna.

13. The distributed MIMO-OFDM system as claimed in claim 11 or 12, wherein the module for controlling location of head of frame (22) comprises a calculation unit (221) and a location unit (222) connected to the calculation unit (221), wherein
the calculation unit (221) is for obtaining correlation accumulation values for all positions in a range of a frame by calculation;
the location unit (222) is for performing modulo operation on the correlation accumulation values to find the position for the maximum of accumulation values as the head of the frame transmitted from the corresponding transmitting antenna.

14. A transmitting apparatus, comprising body of a transmitter (1), **characterized in that** the apparatus further comprises a database of transmitter (11) and a module for controlling generation of preamble (12), wherein:

the database of transmitter (11), connected to the body of the transmitter (1) and the module for controlling generation of preamble (12), is for storing PN sequences with different lengths used for respective transmitting antennas;
the module for controlling generation of preamble (12), connected to the body of the transmitter (1) and the database of transmitter (11), is for generating preambles for synchronization using the PN sequences with different lengths.

15. The transmitting apparatus as claimed in claim 14, wherein the lengths of the PN sequences stored in the database of transmitter have a non-multiple relationship.

16. The transmitting apparatus as claimed in claim 15, wherein the module for controlling generation of preamble (12) comprises a comparison unit (121) and a processing unit (122) connected to the comparison unit (121), wherein
the comparison unit (121) is for comparing the length of the sequence formed by repeating the PN sequence with each length a number of times with the set length of the preamble to obtain a result for comparison;
the processing unit (122) is for processing on the result of comparison and determining another sequence with length equal to the preset length of the preamble according to a predetermined rule as the preamble.

17. A method for generating preambles for transmitting antennas of a transmitter, **characterized in** comprising one-to-one correspondingly generating preambles for synchronization at respective transmitting antennas using PN sequences with different lengths.

18. The method for generating preambles as claimed in claim 17, wherein the lengths of the PN sequences have a non-multiple relationship.

19. The method for generating preambles as claimed in claim 17 or 18, wherein generating preambles comprises the following steps:

setting step: equally setting lengths of the preambles of the respective transmitting antennas as $N_{preamble}$;
repeating step: repeating the PN sequences with respective lengths a number of times to form corresponding first sequences;
comparing step: comparing the length of each first sequence with the length of the preamble $N_{preamble}$ to obtain a corresponding result for comparison; determining step: performing operation on the formed first sequence according to a predetermined rule based on the result for comparison to form a second sequence with length equal to the length of the preamble $N_{preamble}$, which is determined as the preamble.

20. The method for generating preambles as claimed in claim 19, wherein the predetermined rule is, when the first sequence has length equal to the length of the preamble $N_{preamble}$, directly determining the first sequence as the preamble.

21. The method for generating preambles as claimed in claim 19, wherein the predetermined rule is, when the first sequence has length slightly greater than the length of the preamble $N_{preamble}$, setting the data of the first $N_{preamble}$

positions in the first sequence as the preamble.

22. The method for generating preambles as claimed in claim 19, wherein the predetermined rule is, when the first sequence has length slightly less than the length of the preamble $N_{preamble}$, filling the first sequence with data of former positions in the corresponding PN sequence until the length of the first sequence is equal to the length of the preamble $N_{preamble}$ to form the second sequence which is determined as the preamble.

23. A receiving apparatus, comprising body of a receiver (2), **characterized in** further comprising a database of receiver (21) and a module for controlling location of head of frame (22), wherein the database of receiver (21), respectively connected to the body of the receiver (2) and the module for controlling location of head of frame (22), is for storing the different lengths of the PN sequences corresponding to the respective transmitting antennas; the module for controlling location of head of frame (22), respectively connected to the body of the receiver (2) and the database of receiver (21), is for detecting the head of frame based on the length of the PN sequence used for a transmitting antenna using a correlation calculator with width of window having the same length to find a position for a maximum of correlation accumulation values in a range of a frame for each transmitting antenna as the head of frame.

24. The receiving apparatus as claimed in claim 23, wherein the lengths of the PN sequences stored in the database of receiver (21) have a non-multiple relationship.

25. The receiving apparatus as claimed in claim 24, wherein the module for controlling location of head of frame (22) comprises a calculation unit (221) and a location unit (222) connected to the calculation unit (221), wherein
the calculation unit (221) is for obtaining correlation accumulation values for all positions in a range of a frame by calculation;
the location unit (222) is for performing modulo operation on the correlation accumulation values to find the position for the maximum of accumulation values as the head of the frame transmitted from the corresponding transmitting antenna.

26. A method for locating head of frame in a receiver, **characterized in** comprising performing calculation using correlation calculators with width of window corresponding to the lengths of the PN sequences to locate head of frame.

27. The method for locating head of frame as claimed in claim 26, wherein it comprises the following steps:

   calculating step:

   1) performing a correlation multiplying-accumulation calculation from an initial position which is any position j of the received data frame to obtain a correlation accumulation value at the position j and storing it in a first empty position of a register;
   2) repeating said correlation multiplying-accumulation calculation to obtain a correlation accumulation value at a next position $j = j+1$ and storing it in a next empty position of the register;
   3) repeating the above process until all positions of the register are filled with the calculated correlation accumulation values, i.e. the correlation accumulation values for all positions are calculated in a range of a data frame;

   step for determining head of frame: performing modulo operation on all correlation accumulation values in the register to find the position for the maximum of accumulation values as the head of the frame transmitted from the corresponding transmitting antenna.

28. The method for locating head of frame as claimed in claim 27, wherein the register is selected as storage means having a capacity of the correlation accumulation values for positions of a whole data frame.

29. The method for locating head of frame as claimed in claim 27, wherein the step of performing a correlation multiplying-accumulation calculation to obtain a correlation accumulation value at a position comprises the following steps:

   setting an accumulator as zero;
   performing conjugated multiplying on the data of the initial position j and the data at a position spaced by length $P_i$ of the corresponding PN sequence after the initial position, and adding the result of the multiplying to the accumulator;
   shifting right the position for calculation to the position j+1, performing the above conjugated multiplying for the position and adding the result to the accumulator;

repeating the above operation until the window has been shifted right by $N_{preamble}$ - $P_i$ positions, thereby the correlation accumulation value for the position j is calculated;

storing the correlation accumulation value for the position j in the register.

Figure 1

Figure 2

1 — Body of transmitter – – – – – – – – – – – – – – – – – – 2 — Body of receiver

12 — Module for controlling generation of preamble

Comparison unit — 121

Processing unit — 122

11 — Database of transmitter

22 — Module for controlling location of head of frame

Calculation unit — 221

Location unit — 222

21 — Database of receiver

## Figure 3

Transmitting apparatus

1 — Body of transmitter

12 — Module for controlling generation of preamble

Comparison unit — 121

Processing unit — 122

11 — Database of transmitter

## Figure 4

Receiving apparatus

Body of receiver | 2

12

Module for controlling
location of head of frame

Database of receiver | 21

Calculation
unit | 221

Location unit | 222

Figure 5

Figure 6

Figures 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MODY ; STUEBER.** Receiver implementation for a MIMO OFDM system. IEEE, 17 November 2002, vol. 1, 716-720

- **SCHENK ; ZELST.** Frequency synchronization for MIMO OFDM wireless LAN systems. IEEE, 2003, vol. 2, 781-785